# FASCICULE DE BREVET EUROPEEN

(11) **EP 3 129 632 B1**
(45) Date de publication et mention de la délivrance du brevet: **07.10.2020**
(21) Numéro de dépôt: 15717033.3
(22) Date de dépôt: 26.03.2015
(51) Int. Cl.: F02K 1/72, F02K 1/76, F02K 1/80, F02K 1/09

(54) **INVERSEUR DE POUSSÉE DE NACELLE DE TURBORÉACTEUR COMPRENANT UNE COMMANDE COMMUNE POUR LES CAPOTS MOBILES ET UNE TUYÈRE VARIABLE**
SCHUBUMKEHRER EINER GONDEL MIT TURBOFANGEHÄUSE MIT EINER EINZELNEN STEUERUNG FÜR DIE BEWEGLICHEN VERKLEIDUNGEN UND EINE VERSTELLBARERE DÜSE
THRUST REVERSER OF A TURBOFAN POD COMPRISING A SINGLE CONTROL FOR THE MOVABLE COWLINGS AND A VARIABLE NOZZLE

(30) Priorité: 11.04.2014 FR 1453266
(43) Date de publication de la demande: 15.02.2017
(73) Titulaire: Safran Nacelles, 76700 Gonfreville-l'Orcher (FR)
(72) Inventeur: BOILEAU, Patrick, F-31170 Tournefeuille (FR); KERBLER, Olivier, F-92160 Antony (FR)
(74) Mandataire: Delorme, Nicolas
(86) Numéro de dépôt international: PCT/FR2015/050777
(87) Numéro de publication internationale: WO 2015/155434

(56) Documents cités:
- WO-A1-2010/142881
- WO-A1-2013/102739
- FR-A1- 2 960 917
- FR-A1- 2 991 670
- US-A- 5 794 434
- US-A1- 2013 263 600

## Description

La présente invention concerne un inverseur de poussée pour une nacelle d'aéronef recevant un turboréacteur, ainsi qu'une nacelle d'aéronef équipée d'un tel inverseur de poussée.

Les ensembles de motorisation pour les aéronefs comportent généralement une nacelle formant une enveloppe extérieure globalement circulaire, comprenant à l'intérieur un turboréacteur disposé suivant l'axe longitudinal de cette nacelle. Le turboréacteur reçoit de l'air frais venant du côté amont ou avant, et rejette du côté aval ou arrière les gaz chauds issus de la combustion du carburant, qui donnent une certaine poussée.

Les turboréacteurs à double flux présentent autour de ce turboréacteur des aubes de soufflante générant un flux secondaire important d'air froid le long d'une veine annulaire passant entre le moteur et la nacelle, qui ajoute une poussée élevée.

Certaines nacelles comportent un système d'inversion de poussée qui ferme au moins en partie la veine annulaire d'air froid, et rejette le flux secondaire vers l'avant afin de générer une poussée de freinage de l'aéronef.

Un type d'inverseur de poussée connu, présenté notamment par le document FR-A1-2758161, comporte des capots mobiles arrière appelés « Trans-cowl », coulissant axialement vers l'arrière sous l'effet de vérins en déployant des volets dans la veine annulaire afin de fermer en majeure partie cette veine. Les volets renvoient le flux d'air froid radialement vers l'extérieur en passant par des grilles découvertes par les capots mobiles lors de leurs coulissements, comprenant des aubes qui dirigent ce flux vers l'avant.

Par ailleurs certaines nacelles comportent une tuyère secondaire arrière appelée « Variable Fan Nozzle » (VFN), donnant un flux secondaire variable grâce à un mouvement de translation de cette tuyère qui est reliée aux capots mobiles de l'inverseur par des moyens de guidage permettant un mouvement axial du système de commande.

Un système d'actionnement connu de l'inverseur de poussée ainsi que de la tuyère secondaire variable, comporte des vérins fixés d'un côté sur la structure avant fixe et de l'autre côté sur la tuyère secondaire disposée à l'arrière, ces vérins traversant toute la structure des capots mobiles de l'inverseur située axialement entre ces deux parties. La nacelle comporte aussi deux verrous commandés indépendants, un verrou fixe liant la structure avant aux capots, et un verrou mobile liant ces capots à la tuyère secondaire.

En actionnant les vérins vers l'arrière, on obtient seulement un recul de la tuyère secondaire si le verrou mobile est ouvert et le verrou fixe fermé, et un déploiement de l'inverseur de poussée en même temps que la tuyère si à l'inverse le verrou fixe est ouvert et le verrou mobile fermé. Un type d'inverseur connu est aussi présenté par les documents FR 2 991 670 A1, US 5 794 434 A, FR 2 960 917 A1 et US 2013/263600 A1.

Un problème qui se pose avec ce système d'actionnement est que pour commander les capots mobiles, les poussées axiales développées par les vérins sont directement appliquées sur la tuyère secondaire disposée en arrière, qui transmet ensuite ces efforts vers l'avant aux capots mobiles par le verrou mobile. Il faut alors dimensionner la tuyère secondaire pour transmettre ces contraintes, ce qui oblige à prévoir des masses supplémentaires.

De plus il faut commander deux verrous indépendants, ce qui est complexe.

La présente invention a notamment pour but d'éviter ces inconvénients de la technique antérieure.

Elle propose à cet effet un inverseur de poussée d'une nacelle de turboréacteur à double flux, comprenant des capots mobiles qui reculent par rapport à une structure avant fixe pour découvrir des grilles fixes ou mobiles d'inversion de poussée, ainsi qu'une tuyère secondaire variable reliée aux capots mobiles par des moyens de guidage permettant un déplacement commandé par des vérins prenant appui sur la structure avant pour appliquer une poussée axiale, caractérisé en ce que les vérins sont directement reliés à la tuyère secondaire, et en ce que l'inverseur de poussée comporte des verrous liés aux capots mobiles, comprenant deux positions donnant alternativement un blocage sur la structure avant ou un blocage sur la commande de la tuyère secondaire.

Un avantage de cet inverseur de poussée est que pour l'actionnement des capots, les efforts développés par les vérins sont transmis directement à ces capots en passant par les verrous dans la position donnant le blocage sur la commande de la tuyère secondaire, ce qui évite de faire passer les contraintes dans cette tuyère.

De plus les verrous comprenant seulement deux positions, sont simples à commander par un unique actionneur donnant ces deux positions.

L'inverseur de poussée selon l'invention, tel que revendiqué dans la revendication 1, peut comporter de plus une ou plusieurs des caractéristiques suivantes, qui peuvent être combinées entre elles.

Selon un mode de réalisation les verrous sont basculants pour prendre leurs deux positions, ce qui représente un mode de construction simple.

Les verrous positionnés sur le capot mobile peuvent être commandés à partir de la structure avant fixe.

En particulier chaque verrou basculant peut comporter un pivot central lié aux capots mobiles, et axialement de chaque côté un moyen d'accrochage qui peut se fixer l'un à la structure avant, et l'autre à la commande de la tuyère secondaire.

Selon un autre mode de réalisation les verrous sont montés sur un axe pivotant sur environ 90° pour prendre leurs deux positions, ce qui représente un deuxième mode de construction simple.

En particulier chaque verrou peut comporter un axe disposé longitudinalement dans la nacelle, guidé en rotation par un élément lié aux capots mobiles, comportant à chaque extrémité des moyens d'accrochage qui peuvent se fixer alternativement l'un à la structure avant et l'autre à la commande de la tuyère secondaire.

Avantageusement, l'inverseur de poussée comporte une pièce mobile formant une sécurité qui maintient le blocage du verrou dans chaque position. On assure ainsi de manière simple la sécurité en évitant un décrochage du blocage.

La pièce mobile de sécurité peut être un tiroir guidé par un élément lié aux capots mobiles, comportant un coulissement pour bloquer le verrou alternativement dans une de ses deux positions.

Dans ce cas la pièce mobile de sécurité est avantageusement commandée par l'actionneur qui déplace le verrou, un jeu étant interposé entre cet actionneur et ce verrou pour permettre un déplacement de la pièce mobile avant de déplacer le verrou. On réalise ainsi une cinématique simple qui évite des risques de blocage du fonctionnement.

Avantageusement, les dispositifs de blocage comportent des moyens élastiques de rappel donnant deux positions stables de blocage et de déblocage. Ces moyens élastiques permettent de manière simple et économique d'assurer ces positions stables.

De manière optionnelle, les verrous positionnés sur le capot mobile peuvent être commandés à partir de la structure avant fixe et ne verrouiller que la tuyère secondaire variable par rapport au capot mobile.

L'invention a aussi pour objet une nacelle de turboréacteur comportant un inverseur de poussée comprenant l'une quelconque des caractéristiques précédentes.

L'invention sera mieux comprise et d'autres caractéristiques et avantages apparaîtront plus clairement à la lecture de la description ci-après donnée à titre d'exemple, en référence aux dessins annexés dans lesquels :
- les figures 1a, 1b et 1c sont des schémas en coupe axiale d'un inverseur de poussée selon l'invention, présenté successivement en position fermée avec la tuyère secondaire rétractée puis déployée, et en position ouverte ;
- la figure 2a, 2b, 2c, 2d et 2e sont des vues d'un verrou à basculement pour cet inverseur, présenté successivement avec un blocage sur la structure avant la tuyère étant rétractée puis déployée, en cours de basculement du blocage, et avec un blocage sur le vérin les capots étant fermés puis ouverts ; et
- les figures 3a, 3b, 3c et 3d sont des vues d'un verrou à rotation pour cet inverseur, présenté successivement avec un blocage sur la structure avant la tuyère étant rétractée puis déployée, en cours de rotation, et avec un blocage sur le vérin les capots étant ouverts.

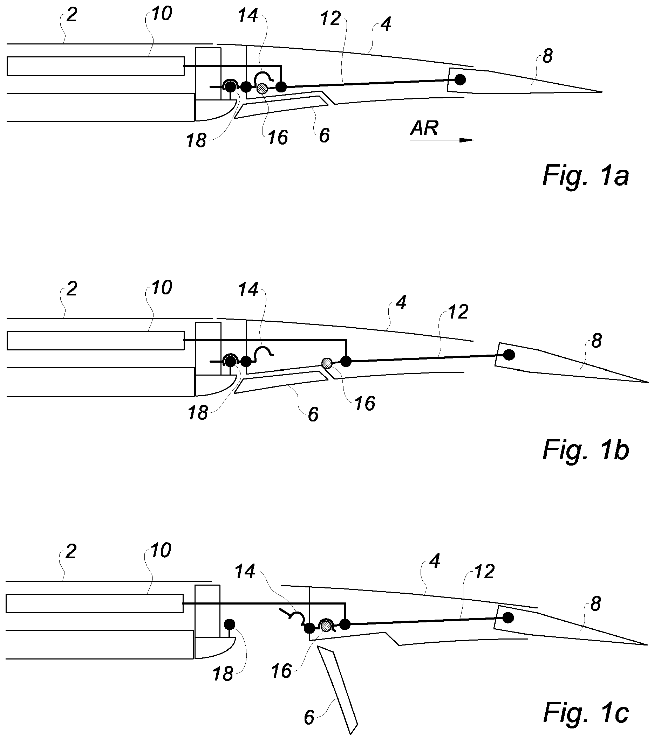

La figure 1 présente la partie arrière d'une nacelle de turboréacteur, la direction axiale arrière étant indiquée par la flèche « AR », comprenant une structure avant fixe 2, et des capots mobiles 4 ajustés en arrière de cette structure.

Chaque capot 4 est relié à la structure avant 2 par des moyens de guidage longitudinaux, qui permettent un coulissement de ces capots vers l'arrière pour ouvrir le passage du flux secondaire radialement vers l'extérieur, et abaisser des volets 6 fermant la sortie vers l'arrière, et renvoyant le flux vers ces passages comprenant des grilles d'inversion de poussée non représentées.

Une tuyère secondaire 8 disposée à l'arrière de la nacelle, est reliée aux capots 4 par des rails de guidage axiaux permettant une position rétractée vers l'avant présentée figure 1a, et une position déployée vers l'arrière présentée figure 1b qui améliore les rendements pour les hauts régimes de rotation du turboréacteur.

Des vérins 10 disposés axialement dans la structure avant 2, comportent un corps fixé à cette structure avant, et une tige sortant vers l'arrière qui est directement reliée à la tuyère secondaire 8 par une barre de commande axiale 12 traversant les capots 4 dans leurs longueurs.

Un verrou basculant 14 lié par un pivot central aux capots 4, comporte deux positions stables de blocage comprenant alternativement un crochet avant engagé sur un téton avant 18 fixé à la structure avant 2, ou un crochet arrière engagé sur un téton arrière 16 fixé à la barre de commande 12.

Les figures 1a et 1b présentent le verrou basculant 14 avec son crochet avant engagé, ce qui lie les volets 4 à la structure avant 2. On peut alors commander le déploiement de la tuyère 8 seule, avec le recul du vérin 10 comme présenté figure 1b.

La figure 1c présente le verrou basculant 14 avec son crochet arrière engagé, ce qui détache les capots 4 de la structure avant 2 et les fixe à la tuyère 8. L'actionnement du vérin 10 entraîne alors le recul de l'ensemble formé par les volets 4 et la tuyère 8.

On réalise ainsi avec un actionneur simple et compact, une commande de deux mouvements différents qui optimise les chemins d'efforts afin de ne pas appliquer de contrainte inutile sur les éléments. On obtient en particulier une liaison pondérée entre le vérin 10 et la tuyère variable 8 en mode flux direct, qui permet de contrôler la course et les butées des mouvements de cette tuyère, ainsi qu'une liaison directe entre le vérin et la structure mobile de l'inverseur de poussée.

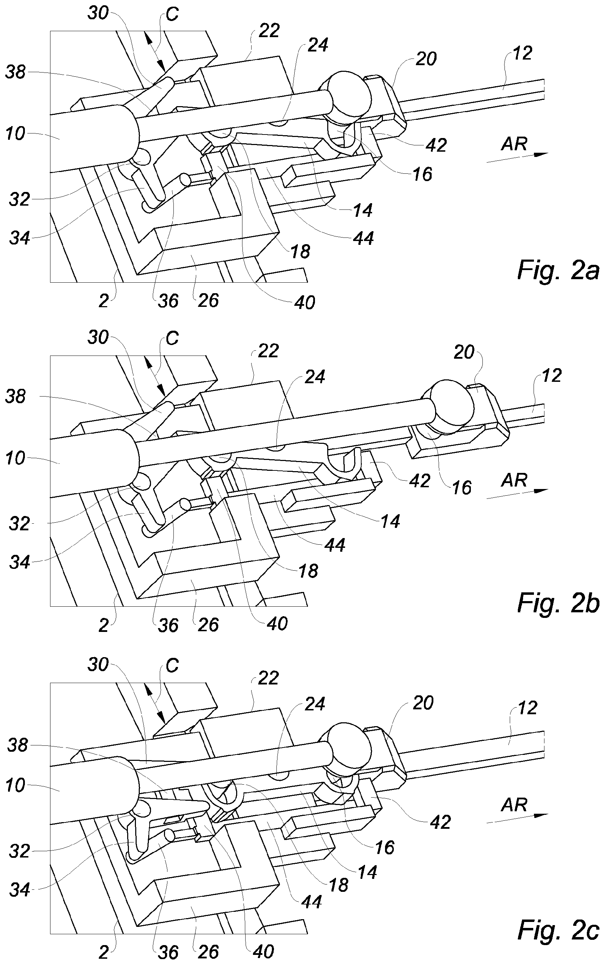

La figure 2a présente un verrou basculant 14 qui bascule autour d'un pivot 24 perpendiculaire à l'axe de la nacelle, fixé sur un élément 22 de la structure coulissant axialement avec les volets mobiles.

Le verrou 14 allongé suivant l'axe de la nacelle, comporte de manière symétrique de chaque côté de son pivot 24, un crochet arrière qui peut s'engager sur un téton arrière 16 faisant partie d'une fixation 20 reliant l'extrémité de la tige du vérin 10 à la barre de commande 12, et un crochet avant qui peut alternativement s'engager sur un téton avant 18 fixé sur un support 26 lié à la structure avant 2.

Le verrou 14 comporte à son extrémité avant une pointe dépassant du crochet, qui est engagée entre deux bras parallèles 30 montés chacun sur un pivot 32 fixé sur le support 26, qui sont reliés entre eux par une traverse 38 montés sur des articulations afin de permettre une inclinaison de ces bras tout en maintenant leur parallélisme.

Un des bras 30 comporte au niveau de son pivot 32 un coude sensiblement perpendiculaire 34, se terminant par une biellette articulée 36 qui est reliée à un tiroir 44 guidé à la fois dans le support 26 et l'élément 22 lié aux volets mobiles, pour permettre uniquement un coulissement suivant l'axe de la nacelle sans pouvoir s'écarter latéralement du verrou 14.

Les bras 30 pivotent sous l'effet d'un actionneur non représenté réalisant un mouvement transversal suivant la flèche « C », pour fixer deux positions stables d'extrémité correspondant aux deux positions de blocage du verrou. Ce pivotement des bras 30 entraîne un basculement du verrou 14 comprenant sa pointe engagée entre ces bras avec un jeu important, ainsi qu'un coulissement du tiroir 44 entraîné par la biellette 36, qui comporte un plot avant 40 et un plot arrière 42 dirigés vers chacun des crochets correspondant de ce verrou.

Le fonctionnement du verrou est le suivant.

La figure 2a présente le crochet avant engagé sur le téton 18 de la structure avant 2, le tiroir 44 guidé axialement ayant glissé vers l'arrière de manière à ajuster son plot avant 40 au dos de ce crochet, ce qui empêche un dégagement accidentel du crochet qui est ainsi verrouillé sur son téton.

Avec le verrou 14 maintenu dans cette position, la figure 2b présente le vérin 10 qui déploie la tuyère secondaire par un recul de sa tige entraînant par la fixation 20 la barre de commande 12. La structure des volets mobiles reste attachée de manière sécurisée à la structure avant 2, grâce au tiroir 44 qui maintient la position du verrou 14.

Le vérin 10 ainsi que la tuyère secondaire étant rétracté, la figure 2c présente les bras 30 en train de pivoter sous l'effet de leur actionneur, en commençant par effectuer un coulissement vers l'avant du tiroir 44 ce qui déverrouille le crochet avant du verrou 14 par le dégagement du plot avant 40. Le jeu entre la pointe avant du verrou 14 et les deux bras 30 permet de commencer le pivotement de ces bras ainsi que le coulissement du tiroir 44, avant de commencer à basculer ce verrou.

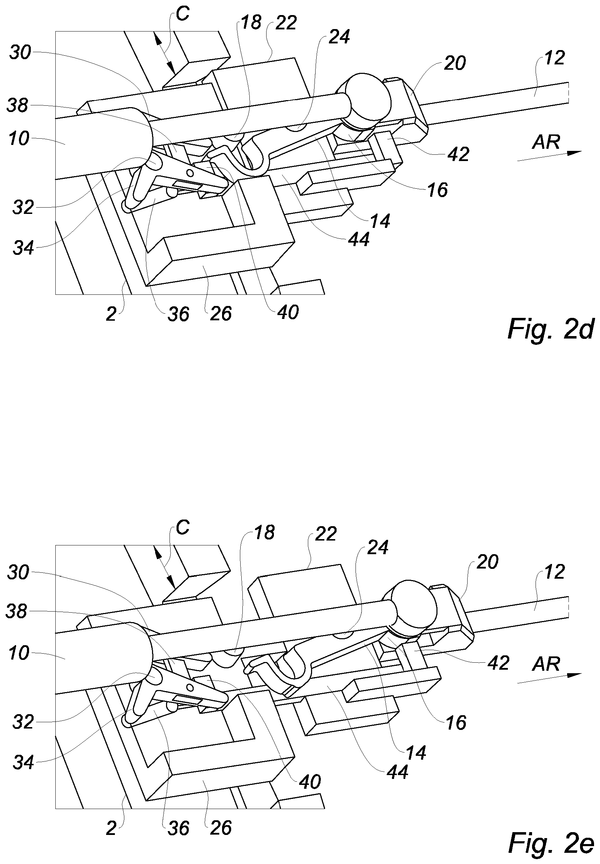

La figure 2d présente la fin du basculement du verrou 14, le plot arrière 42 étant venu en face du crochet arrière, ce qui verrouille la position comprenant le détachement des capots mobiles de la structure avant 2, et leurs rattachements de manière sécurisée à la barre 12 commandant la tuyère.

On peut ensuite comme présenté figure 2e, actionner le vérin 10 pour faire reculer à la fois les volets mobiles et la tuyère secondaire.

Avantageusement le verrou 14 ou son actionneur comporte un ressort non représenté, qui lors d'un mouvement du verrou est d'abord comprimé puis ensuite détendu pour donner deux positions stables d'extrémité correspondant aux deux positions de blocage de ce verrou.

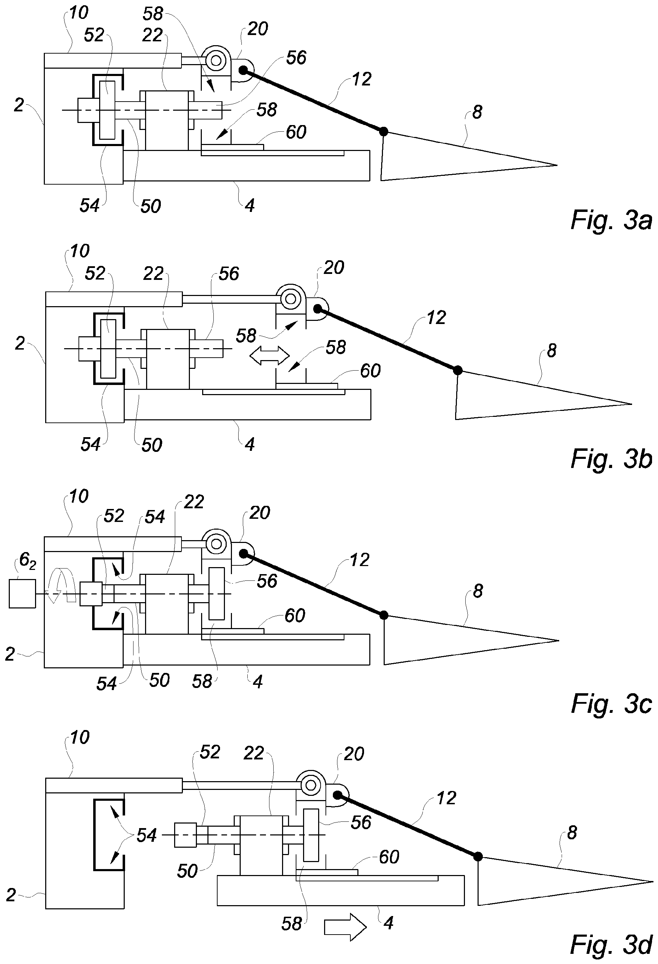

La figure 3a présente le verrou 50 formé par un axe disposé longitudinalement dans la nacelle, guidé en rotation par un élément 22 de la structure liée aux capots mobiles, comportant à chaque extrémité un barreau transversal avant 52 ou arrière 56 qui sont disposés perpendiculairement l'un par rapport à l'autre.

Le barreau avant 52 se lie à la structure avant 2 quand il est vertical, en s'engageant dans des crochets supérieur et inférieur 54 de cette structure. De la même manière le barreau arrière 56 se lie au vérin 10 quand il est vertical en s'engageant dans un crochet supérieur 58 de la fixation 20, ce barreau étant aussi engagé dans un crochet inférieur 58 monté sur une glissière 60 fixée sur les capots mobiles 4.

On réalise ainsi par une rotation de l'axe du verrou 50 sur 90° en mettant un barreau vertical pour l'engager dans les deux crochets de son côté, un blocage des capots mobiles 4 avec alternativement la structure avant 2 ou la tuyère secondaire 8, l'autre barreau horizontal pouvant librement coulisser devant les crochets correspondant à son côté.

Le fonctionnement du verrou est le suivant.

La figure 3a présente l'axe du verrou 50 engagé sur les crochets 52 de la structure avant 2, et dégagé du crochet 58 lié au vérin 10. On manœuvre alors uniquement la tuyère secondaire 8 comme présenté figure 3b, en laissant les capots mobiles 4 fixés à la structure avant 2.

Le vérin 10 ainsi que la tuyère secondaire étant rétracté, la figure 3c présente l'axe du verrou 50 en train de pivoter sous l'effet d'un actionneur 62, ce qui dégage le barreau avant 52 de ses crochets 54 et engage le barreau arrière 56 dans le crochet 58 lié au vérin 10.

On détache alors les capots mobiles 4 de la structure avant 2, puis on manœuvre en même temps l'ensemble formé par ces capots mobiles et la tuyère secondaire 8, comme présenté figure 3d.

## Revendications

1. Inverseur de poussée d'une nacelle de turboréacteur à double flux, comprenant des capots mobiles (4) qui reculent par rapport à une structure avant fixe (2) pour découvrir des grilles fixes ou mobiles d'inversion de poussée, ainsi qu'une tuyère secondaire à section variable (8) reliée aux capots mobiles par des moyens de guidage permettant un déplacement commandé par des vérins (10) prenant appui sur la structure avant fixe pour appliquer une poussée axiale, **caractérisé en ce que** les vérins (10) sont directement reliés à la tuyère secondaire (8), et **en ce que** l'inverseur de poussée comporte des verrous (14, 50) positionné sur les capots mobiles (4), chacun des verrous comprenant deux positions, commandées par un actionneur, donnant alternativement un blocage sur la structure avant (2) ou un blocage sur la commande (10) de la tuyère secondaire (8).

2. Inverseur de poussée selon la revendication 1, **caractérisé en ce que** les verrous (14) sont basculant pour prendre leurs deux positions.

3. Inverseur de poussée selon la revendication 2, **caractérisé en ce que** les verrous positionnés sur le capot mobiles (4) peuvent être commandés à partir de la structure avant fixe (2).

4. Inverseur de poussée selon la revendication 3, **caractérisé en ce que** chaque verrou basculant (14) comporte un pivot central lié aux capots mobiles (4), et axialement de chaque côté un moyen d'accrochage qui peut se fixer l'un à la structure avant (2), et l'autre à la commande (10) de la tuyère secondaire (8).

5. Inverseur de poussée selon l'une des revendications 1 ou 3, **caractérisé en ce que** les verrous (50) sont montés sur un axe pivotant sur environ 90° pour prendre leurs deux positions.

6. Inverseur de poussée selon la revendication 5, **caractérisé en ce que** chaque verrou comporte un axe disposé longitudinalement dans la nacelle, guidé en rotation par un élément (22) lié aux capots mobiles (4), comportant à chaque extrémité des moyens d'accrochage (52, 56) qui peuvent se fixer alternativement l'un à la structure avant (2) et l'autre à la commande (10) de la tuyère secondaire (8).

7. Inverseur de poussée selon l'une quelconque des revendications précédentes, **caractérisé en ce qu'**il comporte une pièce mobile (44) formant une sécurité qui maintient le blocage du verrou dans chaque position.

8. Inverseur de poussée selon la revendication 7, **caractérisé en ce que** la pièce mobile de sécurité est un tiroir (44) guidé par un élément (22) lié aux capots mobiles (4), comportant un coulissement pour bloquer le verrou (14) alternativement dans une de ses deux positions.

9. Inverseur de poussée selon la revendication 7 ou 8, **caractérisé en ce que** la pièce mobile de sécurité (44) est commandée par l'actionneur qui déplace le verrou (14), un jeu étant interposé entre cet actionneur et ce verrou pour permettre un déplacement de la pièce mobile avant de déplacer le verrou.

10. Inverseur de poussée selon l'une quelconque des revendications précédentes, **caractérisé en ce que** les dispositifs de blocage comportent des moyens élastiques donnant deux positions stables de blocage et de déblocage.

11. Inverseur de poussée selon les revendications précédentes, **caractérisé en ce que** les verrous positionnés sur le capot mobile (4) peuvent être commandés à partir de la structure avant fixe (2) et ne verrouiller que la tuyère secondaire variable (8) par rapport au capot mobile (4).

12. Nacelle de turboréacteur comportant un inverseur de poussée, **caractérisée en ce que** cet inverseur est réalisé selon l'une quelconque des revendications précédentes.

## Patentansprüche

1. Schubumkehrer einer Gondel eines Zweikreis-Turbostrahltriebwerks, umfassend bewegliche Verkleidungen (4), die in Bezug auf eine festsitzende Vorderstruktur (2) zurückgehen, um festsitzende oder bewegliche Schubumkehrgitter freizulegen, sowie eine Sekundärdüse mit variablem Querschnitt (8), die mit den beweglichen Verkleidungen durch Führungsmittel verbunden ist, die eine durch Zylinder (10) gesteuerte Verschiebung ermöglichen, welche auf die festsitzende Vorderstruktur drücken, um einen axialen Schub auszuüben, **dadurch gekennzeichnet, dass** die Zylinder (10) direkt mit der Sekundärdüse (8) verbunden sind, und dadurch, dass der Schubumkehrer Verriegelungen (14, 50) umfasst, die auf den beweglichen Verkleidungen (4) positioniert sind, wobei jede der Verriegelungen zwei Positionen umfasst, gesteuert durch einen Aktor, die alternativ eine Blockade an der Vorderstruktur (2) oder eine Blockade an der Steuerung (10) der Sekundärdüse (8) bringen.

2. Schubumkehrer nach Anspruch 1, **dadurch gekennzeichnet, dass** die Verriegelungen (14) kippbar sind, um ihre zwei Positionen einzunehmen.

3. Schubumkehrer nach Anspruch 2, **dadurch gekennzeichnet, dass** die Verriegelungen, die auf den beweglichen Verkleidungen (4) positioniert sind, ausgehend von der festsitzenden Vorderstruktur (2) gesteuert werden können.

4. Schubumkehrer nach Anspruch 3, **dadurch gekennzeichnet, dass** jede kippbare Verriegelung (14) einen zentralen Drehzapfen aufweist, der mit den beweglichen Verkleidungen (4) verbunden ist, und axial auf jeder Seite ein Einhakmittel, wovon eines an der Vorderstruktur (2) und das andere an der Steuerung (10) der Sekundärdüse (8) fixiert werden kann.

5. Schubumkehrer nach einem der Ansprüche 1 oder 3, **dadurch gekennzeichnet, dass** die Verriegelungen (50) auf einer Achse montiert sind, die um ungefähr 90° schwenkbar ist, um ihre zwei Positionen einzunehmen.

6. Schubumkehrer nach Anspruch 5, **dadurch gekennzeichnet, dass** jede Verriegelung eine Achse aufweist, die längs in der Gondel angeordnet ist, die durch ein Element (22), das mit den beweglichen Verkleidungen (4) verbunden ist, drehgeführt ist, die an jedem Ende Einhakmittel (52, 56) aufweist, wovon alternativ eines an der Vorderstruktur (2) und das andere an der Steuerung (10) der Sekundärdüse (8) fixiert werden kann.

7. Schubumkehrer nach einem der vorstehenden Ansprüche, **dadurch gekennzeichnet, dass** er ein bewegliches Teil (44) aufweist, das eine Sicherheitsvorrichtung bildet, welche die Blockade der Verriegelung in jeder Position aufrechterhält.

8. Schubumkehrer nach Anspruch 7, **dadurch gekennzeichnet, dass** das bewegliche Sicherheitsteil ein Einschub (44) ist, der durch ein Element (22) geführt wird, das mit den beweglichen Verkleidungen (4) verbunden ist, der eine Schiebevorrichtung aufweist, um die Verriegelung (14) alternativ in einer ihrer zwei Positionen zu verriegeln.

9. Schubumkehrer nach Anspruch 7 oder 8, **dadurch gekennzeichnet, dass** das bewegliche Sicherheitsteil (44) durch den Aktor gesteuert wird, der die Verriegelung (14) verschiebt, wobei ein Spiel zwischen diesem Aktor und dieser Verriegelung eingefügt ist, um eine Verschiebung des beweglichen Teils zu ermöglichen, bevor die Verriegelung verschoben wird.

10. Schubumkehrer nach einem der vorstehenden Ansprüche, **dadurch gekennzeichnet, dass** die Blockadevorrichtungen elastische Mittel aufweisen, die zwei stabile Positionen zur Blockade und zur Freigabe bringen.

11. Schubumkehrer nach den vorstehenden Ansprüchen, **dadurch gekennzeichnet, dass** die Verriegelungen, die auf der beweglichen Verkleidung (4) positioniert sind, ausgehend von der festsitzenden Vorderstruktur (2) gesteuert werden können und nur die variable Sekundärdüse (8) in Bezug auf die bewegliche Verkleidung (4) verriegeln können.

12. Gondel eines Turbostrahltriebwerks, die einen Schubumkehrer aufweist, **dadurch gekennzeichnet, dass** dieser Umkehrer nach einem der vorstehenden Ansprüche ausgeführt ist.

## Claims

1. A thrust reverser of a bypass turbojet engine nacelle, comprising movable cowls (4) which move backwards relative to a front fixed structure (2) in order to uncover fixed or movable cascade vanes of thrust reverser, as well as a variable section secondary nozzle (8) connected to the movable cowls by guide means allowing a controlled displacement by cylinders (10) bearing on the fixed front structure in order to apply an axial thrust, **characterized in that** the cylinders (10) are directly connected to the secondary nozzle (8), and **in that** that the thrust reverser includes locks (14, 50) positioned on the movable cowls (4), each lock comprising two positions, controlled by an actuator, causing alternately a blocking on the front structure (2) or a blocking on the control (10) of the secondary nozzle (8).

2. The thrust reverser according to claim 1, **characterized in that** the locks (14) are tilting in order to take their two positions.

3. The thrust reverser according to claim 2, **characterized in that** the locks positioned on the movable cowl (4) can be controlled from the front fixed structure (2).

4. The thrust reverser according to claim 3, **characterized in that** each tilting lock (14) includes a central pivot linked to the movable cowls (4), and axially on either side, an attachment means that may be fixed, one to the front structure (2), and the other to the control (10) of the secondary nozzle (8).

5. The thrust reverser according to any of claims 1 or 3, **characterized in that** the locks (50) are mounted on a pivot axis over about 90° in order to take their two positions.

6. The thrust reverser according to claim 5, **characterized in that** each lock includes an axis longitudinally disposed in the nacelle, guided in rotation by an element (22) linked to the movable cowls (4), including at each end, attachment means (52, 56) which can be alternately fixed, one to the front structure (2) and the other to the control (10) of the secondary nozzle (8).

7. The thrust reverser according to any one of the preceding claims, **characterized in that** it includes a movable part (44) forming a safety which maintains the blocking of the lock in each position.

8. The thrust reverser according to claim 7, **characterized in that** the movable safety part is a drawer (44) guided by an element (22) linked to the movable cowls (4), including a sliding movement for blocking the lock (14) alternately in one of its two positions.

9. The thrust reverser according to claim 7 or 8, **characterized in that** the movable safety part (44) is controlled by the actuator which moves the lock (14), a clearance being interposed between this actuator and this lock in order to allow a displacement of the movable part before moving the lock.

10. The thrust reverser according to any one of the preceding claims, **characterized in that** the blocking devices include resilient means providing two blocking and unblocking stable positions.

11. The thrust reverser according to the preceding claims, **characterized in that** the locks positioned on the movable cowl (4) can be controlled from the front fixed structure (2) and lock only the variable secondary nozzle (8) relative the movable cowl (4).

12. A nacelle of a turbojet engine including a thrust reverser, **characterized in that** this thrust reverser is made according to any one of the preceding claims.
